# EUROPEAN PATENT SPECIFICATION

(11) **EP 2 143 029 B1**
(45) Date of publication and mention of the grant of the patent: **06.03.2019**
(21) Application number: 08736775.1
(22) Date of filing: 19.03.2008
(51) Int. Cl.: G06F 19/00, A61C 1/00, A61G 15/08

(54) **USER-FRIENDLY DENTAL CARE UNIT**
BENUTZERFREUNDLICHE ZAHNPFLEGEEINHEIT
UNITÉ DE SOIN DENTAIRE FACILE À UTILISER

(30) Priority: 19.03.2007 FI 20075180
(43) Date of publication of application: 13.01.2010
(73) Proprietor: PLANMECA OY, 00880 Helsinki (FI)
(72) Inventor: ANDELL, Henri, 02600 Espoo (FI); PIHLAJAMÄKI, Tero, 00820 Helsinki (FI)
(86) International application number: PCT/FI2008/050126
(87) International publication number: WO 2008/119874

(56) References cited:
- EP-A2- 0 845 247
- EP-A2- 1 103 875
- EP-A2- 1 103 875
- DE-A1-102005 018 078
- JP-A- 2003 305 064
- US-A- 5 538 423
- US-A1- 2004 183 352
- US-A1- 2006 177 795
- US-A1- 2007 026 359
- US-A1- 2007 043 720

## Description

The present invention relates to a dental unit and a record for storing data.

A dental unit is a device to which one or more ancillary devices can be attached. Typical ancillary devices are the instruments used in dental treatment, as well as control devices. The dental unit is usually arranged to feed the ancillary devices with the electricity, water, compressed air, vacuum, or mechanical power that they require. Modern dental units are generally microprocessor controlled.

Typical instruments are, for example, micromotor and turbine drills, light curers, water sprays, and similar. Typical ancillary devices also include suction devices for removing saliva and treatment by-products from the mouth. The instruments and the suction devices are connected to the actual dental unit by means of hoses. The hoses of the instruments may contain water connections, air connections and electrical wires for operating the instruments, always according to the type of the instrument.

A typical control device for a dental unit is a foot control, which permits control commands to be given to the dental unit with the aid of a foot, at least during treatment operations. Foot controlling is more hygienic than hand-operated controls, as there is then no need to touch surfaces of the control in the middle of treatment. In addition, there is typically at least one hand control in a dental unit, such as a keypad or a touch surface. Dental units equipped with touch screens are also known. Other control alternatives may certainly also be used, e.g. voice control based on speech recognition.

Also a patient chair is usually attached to a dental unit, in which case the patient chair can also be controlled via the control devices of the dental unit. Other typical ancillary devices are an operation light and a flushing-water system, for example.

WO 2004/084753 presents a dental unit equipped with a graphical user interface.

WO 2006/037862 shows a dental unit, which can be connected to a computer over a data communications link..

WO 2005/070366 presents a computer-controlled dental unit comprising a graphical user interface and a data communications connection.

EP 1103875 presents a system for setting and storing values for operating parameters of dental instruments.

US 5538423 presents a dental drilling system which enables setting and storing data values which represent magnitudes of operating parameters for different operations.Modern dental units offer dentists several advanced functions. In modern dental units, there even has been predefined more advanced functions the performing of which is linked to several control functions, the performance of which includes several control commands for the ancillary devices of the dental unit and/or for the dental unit's own systems. The defined functions may include, for example, functions programmed for specific treatment operations. Such a function can comprise, for example, guiding the patient chair to a proper position, control of switching the operation light on/off, and setting of the instruments into a proper operating status.

The advanced functions in a dental unit facilitate dentist's work, as the dental unit with its ancillary devices can be set to a desired treatment status by a single control. On the other hand, adding of the more advanced functions requires a considerably more complex user interface and thus also makes it more difficult to use the dental unit. Yet, the dentist should be able to use any desired function during treatment as flexibly as possible and without any excess trouble or stress factors relating to control of the dental unit. Use of a more complex user interfaces becomes especially problematic for a dentist who works with several dental units within the same dental practise or in several different dental practices. In such case, it is likely that the user interfaces of the dental units differ from each other especially just regarding the more advanced functions. Differences between the user interfaces are due to variations in the models of the dental units being used. There may be significant differences also between different versions of the same model.

Another problem is the differences between the contents within the functions themselves. This means that in different dental units, a function programmed for a specific treatment operation can include different control commands or instrument setups. This causes problems corresponding to those of the differences in user interfaces.

The object of the invention is to facilitate use of dental units.

The present invention is set out in the appended claims.

With the aid of the invention, use of dental units may be facilitated. Namely, the invention makes possible for the dentist upon moving from one dental unit to another to easily always bring along his own settings to the dental unit to be used at a time, the settings being recorded in his user specific user profile.

In one embodiment, the user profile or a portion of it the dentist carries along with him contains user specific settings relating to a user interface of a dental unit.

In a second embodiment, the user profile or a portion of it the dentist carries along with him contains user specific settings relating to positioning of a patient chair.

In a third embodiment, the user profile or a portion of it the dentist carries along with him contains user specific settings relating to instrument settings.

In a fourth embodiment, the user profile or a portion of it the dentist carries along with him contains user specific settings relating to programmed functions.

In a fifth embodiment, the user profile or a portion of it the dentist carries along with him contains entire programmed functions.

In a sixth embodiment, the user profile or a portion of it the dentist carries along with him contains a combination of the user specific settings or functions of the first, the second, the third, the fourth, and the fifth embodiments mentioned above. Such a combination can contain two, several, or all of the information mentioned above.

With the help of the abovementioned embodiments, a dentist is able to start working more quickly when coming to a dental unit since there is no need to feed user specific settings in the dental unit manually via the user interface.

In one embodiment, the record external to the dental unit in which the user profile or a portion of it is recorded is designed to be carried along by the dentist. Such a record can be e.g. a disk, a smart card or a USB memory stick. In such an embodiment, the dental unit is equipped with a proper reading device for the record being carried along.

In another embodiment, the user profile is read from the record via a data communications link. In such case, the record may be e.g. in another dental unit or in a server connected to a network. In such an embodiment, the dental unit is equipped with a data communications link and the correct user profile or a portion of it is looked up from the record e.g. as a response to a successful login operation, in which the dentist is asked to feed in the dental unit the user ID and possibly also a password. The record described in the first embodiment designed to be carried along, such as a USB memory stick or a smart card, may also be used as an identifier of a dentist. The identification may also be done with the help of another physical identifier, such as a credit card, an RFID identifier or a fingerprint.

In one embodiment, the contents of the user profile itself, too, is editable and selectable by the user. What is meant by this is that in addition to setting values for the control operations or functions of the user profile, the user can select the control operations or functions to be selected to the user profile, too. Thus, the user profile enables recording in the user profile any of the adjustable settings of the dental unit without the need to include all possible settings of the dental unit in the user profile.

In the following, the invention is contemplated with the aid of examples and with reference to the accompanying drawings.
Figure 1A shows an example of one possible view, which is shown on a display of a dental unit according one embodiment.
Figure 1B shows schematically display fields of the display of Figure 1A.
Figure 2A shows a schematic top view of a foot control, which can be connected to a dental unit according to one embodiment.
Figure 2B shows in greater detail a schematic view of a part of the view of Figure 1B.

The dental unit of the example comprises connections for instruments, a control device, a patient chair, an operation light, a suction system, a flushing water system and a display. The dental unit also comprises a drive-power and feed-system for providing drive power or feed to the ancillary devices. The drive power or feed provided comprises at least one of the group: electricity, water, compressed air, vacuum, mechanical power, and light.

The dental unit comprises a control system for controlling the drive-power and feed-system and at least one ancillary device with the help of a microprocessor included in the control system. The control system comprises programmed functions, which contain at least one predefined control function being directed to at least one ancillary device. Additionally, at least one trigger is defined in the control system for each programmed function in response to which said programmed function is performed.

In the example, the microprocessor is arranged to control the dental unit according to a user specific user profile and the dental unit comprises a function of reading the user profile or a part of the user profile from a record external to the dental unit. Typically, the user profile is a file recorded in a record readable by an appropriate computer.

The dental unit can comprise a data communications link for reading the user profile or a part of the user profile from a server of a data network via a data communications link. Besides or instead of this, the dental unit may comprise a data communications link to another dental unit for reading the user profile or a part of the user profile via the data communications link from another dental unit. In addition to or instead of the abovementioned, the dental unit can comprise reading means for reading the user profile or a part of the user profile from a record carried along by the user, such as a memory stick.

The dental unit is preferably also equipped with a function in counter direction, with the help of which the user profile or a part of the user profile can be taken to a corresponding record external to the dental unit. By this way, the user profiles can be brought to the record directly from the dental unit. Another possibility would be to create the user profiles with the help of e.g. a computer.

In addition to a user specific user profile, the dental unit can be equipped with a dental unit specific device profile, in which case the microprocessor is arranged to control the dental unit according to both the device profile and the user specific user profile. In that case, also the function of taking the device profile to a record external to the dental unit and reading the device profile from said record external to the dental unit is realized so that it is easy to make a backup copy of the device profile and copy it to another dental unit, when desired.

The user profile itself can contain parameters for controlling instruments, for example. The user profile can also contain settings relating to control devices. A control device, for example a foot control which is typically used, comprises several press buttons or other selectors, and the user profile can contain settings defining responses to the use of the selectors. For example, the user profile may define a response to one or several selectors, in other words, for example, which function will be implemented as a response to pressing a particular press button of the foot control.

Typically, the dental unit comprises a display on which one can present a menu containing icons relating to functions of the dental unit. Feeds relating to these icons can be received from the control device, and then control instruments or other ancillary devices based on the feeds received. In connection with such a dental unit, the user profile preferably also contains user specific settings relating to the contents of the menu.

The user specific settings relating to the contents of the menu can contain settings relating to the appearance and/or location of the icons, for example. With the help of the settings relating to the appearance of the icons one may define, for example, the picture of the icon or the text linked to the icon. With the help of the settings relating to the location of the icons one may define, for example, in which place of the display the icon is presented. With the help of the settings relating to the location of the icons one can also define which icons are presented in any given menu, i.e. an icon can be defined to be located in a specific sub menu or main menu or it can be hidden from a menu altogether.

The user specific settings relating to the contents of a menu may contain, in addition to or instead of the above, settings of the functions linked with the icons or complete programmed functions, too. Here, a programmed function refers to a program which is arranged to control the dental unit to realize a combination of at least two control operations.

A control operation can be, for example, switching on an operation light, switching off an operation light, dimming an operation light, controlling a motor of a patient chair in order to steer the chair into a desired position, feeding of power to an instrument, feeding of water to an instrument, feeding of compressed air or vacuum to an instrument, filling a mug with water, flushing a spit bowl, switching a cooling mist for an instrument on or off, or sending for a dental assistant. By their nature, the control operations are simple basic control commands in the software of the dental unit, or very simple combinations of them.

By combining basic control commands it is possible to realize simple programmed functions, such as setting a power limit for an instrument, setting an operating status of an instrument, adjusting an operating status of an instrument, setting an operating status (view) of a display, adjusting cooling mist of an instrument, setting the operating time for suction, defining a control command for a control device, or defining control commands linked to selectors of a foot control.

However, the programmed functions may also contain complex and extensive combinations of basic control commands, or of other programmed commands. Generally, a programmed function contains a combination of two or more control operations and a definition for whether the control operations are to be performed e.g. consecutively or simultaneously. The control operations may be control operations mentioned above or other control operations the dental unit makes possible.

A programmed function can thus contain, for example, a control operation for steering a patient chair to a predefined position and one or more other controls combined with this. The other control can be, for example, control of an operation light and setting of the operating status of instruments.

One programmed function can be, for example, rinsing the patient's mouth, which function includes filling of a mug with water, moving of the patient chair to a rinsing position. Termination of the function may be incorporated in the same function, which includes flushing of the spit bowl and moving of the chair to a getting-off or to an operation position. The termination may also be realized as a separate function.

A programmed function can contain control operations for controlling several, at least one instrument to predefined operating states.

In this example, the dental unit is arranged to realize a logging on operation when a dentist or another user comes to work at the dental unit. After the logging on operation, or in connection therewith, the dental unit is arranged to read a user profile from a record. After this, the microprocessor controls the dental unit such that the settings defined in the user profile are taken notice of. In case the user does not have a user profile, the dental unit reads default settings from a memory and controls its operation according to the default settings.

In the following, some conceivable functionalities in a dental unit according to one embodiment are presented at length.

### Logging on

Supposing there are several users of the dental unit, a logon view is shown on the display. The users may be, for example, dentists, dental assistants, or oral hygienists. The intent of the function is to make available user's personal settings when the dental unit is set into the treatment mode.

Logging on takes place by selecting a proper user from the user menu in the logon view. The menu shows the users that are recorded on an internal memory device of the dental unit, on a USB flash drive connected to the dental unit, on an external database available to the dental unit, or some other suitable memory device

The dental unit is arranged to monitor its USB port and to display in a menu preferably the first users on the USB flash drive when a USB flash drive is placed in the USB port. The dental unit can also be programmed in such a way that, when a USB flash drive is placed in the USB port, only the users defined on the USB flash drive are shown in the menu. The other user data can be accessed through a separate selection key and by removing the USB flash drive from the USB port. It is possible to use a similar procedure with other memory devices earned by the user as well.

The users in the memory of the dental unit and in a possible database accessible through a data network are preferably displayed in alphabetical order, or through a menu with an alphabetical index if there are a considerable number of users.

The logon function also includes a possibility to logon to the dental unit as a guest. In that case, the dental unit is controlled on the basis of the default settings and the more advanced programmed functions will not be available.

The user can be required to enter a security code in connection with logging on.

After a successful logon, the microprocessor of the dental unit downloads the user profile from a memory device for its use, the user profile containing user specific settings. The user who has logged on can edit his own user-specific settings and record them back into the user profile on the memory device the user profile was retrieved from. The user profile can also be copied onto another memory device.

The user-specific user profile of this kind may contain settings, control-operation parameters and entire programmed functions programmed by the user.

### Display

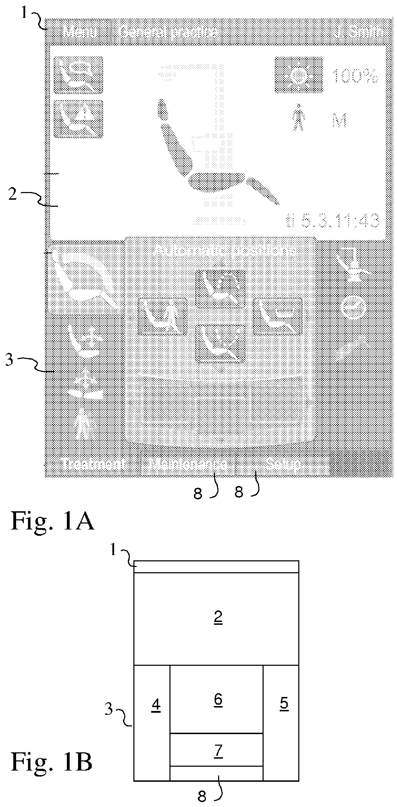

Figure 1A shows the basic view shown on the display in treatment mode. In different treatment and other use cases, the views will naturally differ from that shown in Figure 1A and the basic view of the treatment mode, too, can be configured user-specifically. However, Figure 1A is very suitable for illustrating advantageous properties of a graphical user interface of this embodiment. Figure 1B shows schematically the same view divided in parts.

The views shown on the display comprise a header bar 1 at the upper edge of the display, through which it is possible to go to more extensive menus, such as for performing more advanced configuration and programming functions. This menu is most generally used through a keypad or some other manual control.

Below the header bar 1 there is an information panel 2 on which information is displayed regarded being important in the use case of the dental unit in question. For each treatment case, the dental unit includes an information view with default contents to be displayed on the information panel 2. In a preferred embodiment, the user may set the contents of each information view through a configuration function.

The lower half of the display shows a control panel 3, with the aid of which the user can use the functions of the dental unit, e.g. control the patient chair, edit settings, use a timer, and control instruments. Each function is linked to an icon shown on the control panel. The function is initiated or performed in response to a selection of the icon. The display being a touch screen, user's control can be received through the display. Control directed to the functions indicated by the icons can also be received through a foot control, in a manner to be described later in greater detail. Thus, all of the functions shown on the control panel 3 are also available through the foot control.

The control panel 3 is divided into five parts. These parts are a left-hand menu 4, a right-hand menu 5, upper control icons 6, lower control icons 7, as well as maintenance and setup icons 8 on the lower edge of the display.

The view shown on the control panel 3, too, is operating-state-specific and can be configured by the user.

The parts of the control panel are linked to each other in such a way that, with the aid of the left-hand and right-hand menus 4 and 5, it is possible to select the function or function group to be used, in which case the control icons of the selected function or function group are shown on the upper and lower control icons 6 and 7. In the same way, also the view to be shown on the information panel 2 is selected, which view is thus also set to a desired state with the aid of the left-hand and right-hand menus 4 and 5. The icons shown on the menus 4 and 5 are shown in either an idle status or an active status in such a way that only one of the icons can be in an active status at any one time. The idle status and the active status can be differentiated e.g. with the aid of the colour of the icon. The left-hand and the right-hand menus 4 and 5 are preferably linked together in such a way that at a time, only on one of the menus 4 or 5 an icon can be in an active status.

In addition to the view shown in example, there are several other views on the display whose appearance and purpose can significantly differ from the view of the example.

### Foot control

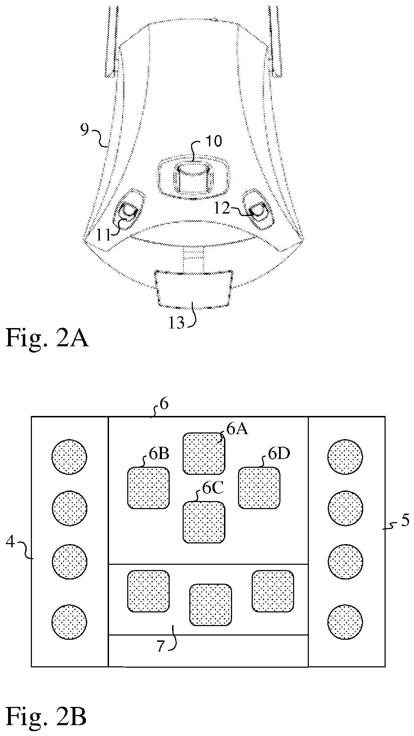

Figure 2A shows a foot control 9. The foot control 9 comprises a centre selector 10, a left selector 11, a right selector 12, and a pedal 13. The centre selector 10 can be guided with a foot forwards, backwards, to the left, and to the right. The left and the right selectors 11 and 12 can be guided with a foot forwards and backwards. The pedal 13 can be pressed downwards and guided to the left and to the right.

A control command can be linked to each of the control movements described above. In the present embodiment, this is done through a graphical user interface shown on the display shown by Figures 1A and 1B. Then, it is possible to receive control commands through the foot control relating to use-case requirements and, if desired, also to user-specific menu views and the icons shown therein. Trough the foot control, it is thus possible to use the advanced functions of the dental unit.

In a preferred embodiment, the selectors of the foot control 9 are linked to the graphical user interface in a manner that will be described in the following, with reference to Figure 2B. Figure 2B is a partial view of Figure 1B, in such a way that Figure 2B shows only the control panel 3 of the display and, particularly, its left-hand menu 4, right-hand menu 5, upper control icons 6 and lower control icons 7. In this example, the icons of the menus 4 and 5 are shown by circular symbols and the control icons 6 and 7 by rounded squares.

In a preferred embodiment, the left-hand menu 4 of the display can be controlled using the left selector 11. The control is preferably implemented in such a way that pushing the left selector 11 forwards or backwards causes transition of one icon (and thus its related function) in the left-hand menu 4 to an active status. Steering the selector 11 forwards causes an upwards movement in the menu in such a way that when one icon is in the active status, based on this steering the active status is transferred to the next icon above. Correspondingly, steering the left selector 11 backwards causes transfer of the active status downwards in the left-hand menu 4. Should the highest or lowest icon be reached by the control, the active status will correspondingly transfer to the lowest or highest icon.

In a preferred embodiment, with the aid of the right selector 12, the right-hand menu 5 of the display is controlled in a manner corresponding entirely to that depicted above in connection with the left selector 11 and menu 4.

In a preferred embodiment, the upper control icons 6 are controlled with the aid of the centre selector 10. This is preferably implemented in such a way that pushing the centre selector 10 forwards means selecting the uppermost control icon 6A, pushing the centre selector 10 means selecting the left-hand control icon 6B, pushing the centre selector 10 backwards means selecting the lowest control icon 6C, and pushing the centre selector 10 to the right means selecting the right-hand control icon 6D. In response to the selection of an icon, the dental unit performs the control operation or programmed function linked to the icon.

In a preferred embodiment, the lower control icons 7 are controlled with the aid of the pedal 13 in a manner corresponding to that described in connection with the centre selector 10 and the icons 6. Pressing on the pedal and guiding it to the left and right thus represents, correspondingly, selection of the centre, the left-hand, and the right-hand icons. The control operation or programmed function linked to the icon is performed in response to the selection of the icon.

The division of the views of the display into parts depicted by the preferred embodiment, and control of these parts by the foot control, creates a user interface that is illustrative and easy to learn. Let it be once again stated, though, that also the setting relating to this user interface, its views and control commands may be arranged as editable by the user and record in a user profile.

Based on the examples presented above, it is clear that several solutions differing from the embodiments presented above can be realised within the framework of the invention. It is thus not the meaning to limit the invention to concern only the examples presented above but the scope of the patent is to be studied in the full extent of the attached patent claims.

## Claims

1. Dental unit and an external record for storing data, the dental unit comprising;
- connections for instruments and for a control device (9),
- a microprocessor arranged to control the dental unit,
wherein said external record for storing data is external to the dental unit and comprises a user specific user profile,
- a means for reading the user profile or a part of the user profile from said record external to the dental unit,
- a display,
wherein the microprocessor is arranged to show on the display a menu (4, 5), which contains icons related to functions of the dental unit and for receiving feeds from the control device (9) relating to the icons and for controlling instruments on the basis of the feeds received from the control device (9), and wherein the user profile contains settings relating to contents of the menu, appearance of the icons and/or location of the icons.

2. Dental unit according to claim 1, wherein said means for reading the user profile comprises a data communications link for reading the user profile or a part of the user profile from a server of a data network via the data communications link, and/or wherein said means for reading the user profile comprises a data communications link to another dental unit for reading the user profile or a part of the user profile from the another dental unit via the data communications link.

3. Dental unit according to claim 1 or 2, wherein said means for reading the user profile comprises a reading means for reading the user profile or a part of the user profile from a record carried along by a user, such as from a memory stick.

4. Dental unit according to any of claims 1 - 3, wherein the dental unit comprises a function for taking the user profile or a part of the user profile to a record external to the dental unit.

5. Dental unit according to any of claims 1 - 4, wherein the dental unit comprises a dental unit specific device profile and the microprocessor is arranged to control the dental unit according to both the device profile and the user specific user profile.

6. Dental unit according to claim 5, wherein the dental unit comprises a function for taking the device profile to a record external to the dental unit and for reading the device profile from said record external to the dental unit.

7. Dental unit according to any of claims 1 - 6, wherein the user profile contains parameters relating to controlling instruments.

8. Dental unit according to any of claims 1 - 7, wherein the control device (9) comprises selectors (10, 11, 12, 13) and the user profile contains settings for defining responses relating to use of the selectors (10, 11, 12, 13).

9. Dental unit according to any of the claims 1 - 8, wherein the user profile contains settings for functions linked to the icons of the menu (4, 5), and/or wherein the user profile contains at least one programmed function, which is arranged to control the dental unit to perform a combination of at least two control functions.

10. Dental unit according to claim 9, wherein the dental unit is arranged to control a patient chair and at least one programmed function contains a control function for taking the patient chair to a predefined position, and/or wherein at least one programmed function contains a control function for taking at least one instrument to a predefined operation state.

11. Dental unit according to claim 9 or 10, wherein at least one programmed function contains a control function for taking the menu (4, 5) shown on the display to a predefined state.

12. Dental unit according to any of claims 1 - 11, wherein the dental unit contains a function for creating or editing the user profile.

13. Dental unit according to claim 12, wherein the user profile is a file recorded in a record.

14. Dental unit according to claim 12 or 13, wherein the function for creating or editing the user profile is arranged to receive a selection from a user for selecting those control operations or functions controlled as based on the user profile to be included in the user profile.

15. Dental unit according to any of the claims 12 - 14, wherein the function of creating or editing the user profile is arranged to receive from a user a selection based on which a pre-settable value that is to be given to a control operation or function is set.

## Patentansprüche

1. Dentaleinheit und ein externer Datensatz zum Speichern von Daten, wobei die Dentaleinheit aufweist:
- Verbindungen für Instrumente und für eine Steuervorrichtung (9),
- einen Mikroprozessor, der zum Steuern der Dentaleinheit eingerichtet ist, wobei der externe Datensatz zum Speichern von Daten extern zur Dentaleinheit ist und ein benutzerspezifisches Benutzerprofil aufweist,
- eine Einrichtung zum Lesen des Benutzerprofils oder eines Teils des Benutzerprofils aus dem Datensatz, der extern zur Dentaleinheit ist,
- eine Anzeige,
wobei der Mikroprozessor eingerichtet ist, um auf der Anzeige ein Menü (4, 5) anzuzeigen, das Symbole enthält, die sich auf Funktionen der Dentaleinheit beziehen, und um Eingaben von der Steuervorrichtung (9) bezüglich der Symbole zu empfangen, und um Instrumente basierend auf den von der Steuervorrichtung (9) empfangenen Eingaben zu steuern, und wobei das Benutzerprofil Einstellungen bezüglich des Inhalts des Menüs, des Erscheinungsbilds der Symbole und/oder des Orts der Symbole enthält.

2. Dentaleinheit nach Anspruch 1, wobei die Einrichtung zum Lesen des Benutzerprofils eine Datenkommunikationsverbindung zum Lesen des Benutzerprofils oder eines Teils des Benutzerprofils von einem Server eines Datennetzwerks über die Datenkommunikationsverbindung aufweist und/oder wobei die Einrichtung zum Lesen des Benutzerprofils eine Datenkommunikationsverbindung zu einer anderen Dentaleinheit zum Lesen des Benutzerprofils oder eines Teils des Benutzerprofils von der anderen Dentaleinheit über die Datenkommunikationsverbindung aufweist.

3. Dentaleinheit nach Anspruch 1 oder 2, wobei die Einrichtung zum Lesen des Benutzerprofils eine Leseeinrichtung zum Lesen des Benutzerprofils oder eines Teils des Benutzerprofils aus einem von einem Benutzer mitgeführten Datensatz wie einem Speicherstick aufweist.

4. Dentaleinheit nach einem der Ansprüche 1 bis 3, wobei die Dentaleinheit eine Funktion aufweist, um das Benutzerprofil oder einen Teil des Benutzerprofils auf einen Datensatz außerhalb der Dentaleinheit zu übertragen.

5. Dentaleinheit nach einem der Ansprüche 1 bis 4, wobei die Dentaleinheit ein für eine Dentaleinheit spezifisches Vorrichtungsprofil aufweist und der Mikroprozessor dazu eingerichtet ist, die Dentaleinheit gemäß sowohl dem Vorrichtungsprofil als auch dem benutzerspezifischen Benutzerprofil zu steuern.

6. Dentaleinheit nach Anspruch 5, wobei die Dentaleinheit eine Funktion aufweist, um das Vorrichtungsprofil auf einen Datensatz, der extern zur Dentaleinheit ist, zu bringen und um das Vorrichtungsprofil von dem Datensatz, der extern zur Dentaleinheit ist, zu lesen.

7. Dentaleinheit nach einem der Ansprüche 1 bis 6, wobei das Benutzerprofil Parameter bezüglich Steuern von Instrumenten enthält.

8. Dentaleinheit nach einem der Ansprüche 1 bis 7, wobei die Steuervorrichtung (9) Selektoren (10, 11, 12, 13) aufweist und das Benutzerprofil Einstellungen zum Definieren von Antworten bezüglich einer Verwendung der Selektoren (10, 11, 12, 13) beinhaltet.

9. Dentaleinheit nach einem der Ansprüche 1 bis 8, wobei das Benutzerprofil Einstellungen für Funktionen enthält, die mit den Symbolen des Menus (4, 5) verknüpft sind, und/oder wobei das Benutzerprofil mindestens eine programmierte Funktion beinhaltet, die eingerichtet ist, um die Dentaleinheit zu steuern, um eine Kombination von mindestens zwei Steuerfunktionen auszuführen.

10. Dentaleinheit nach Anspruch 9, wobei die Dentaleinheit eingerichtet ist, um einen Patientenstuhl zu steuern, und mindestens eine programmierte Funktion eine Steuerfunktion beinhaltet, um den Patientenstuhl in eine vordefinierte Position zu bringen, und/oder wobei mindestens eine programmierte Funktion eine Steuerfunktion beinhaltet, um mindestens ein Instrument in einen vordefinierten Betriebszustand zu bringen.

11. Dentaleinheit nach Anspruch 9 oder 10, wobei mindestens eine programmierte Funktion eine Steuerfunktion beinhaltet, um das auf der Anzeige dargestellte Menü (4, 5) in einen vordefinierten Zustand zu bringen.

12. Dentaleinheit nach einem der Ansprüche 1 bis 11, wobei die Dentaleinheit eine Funktion zum Erzeugen oder Bearbeiten des Benutzerprofils beinhaltet.

13. Dentaleinheit nach Anspruch 12, wobei das Benutzerprofil eine Datei ist, die in einem Datensatz aufgezeichnet ist.

14. Dentaleinheit nach Anspruch 12 oder 13, wobei die Funktion zum Erzeugen oder Bearbeiten des Benutzerprofils eingerichtet ist, um eine Auswahl von einem Benutzer zu empfangen, um diese Steueroperationen oder gesteuerten Funktionen auszuwählen, die wie basierend auf dem Benutzerprofil gesteuert werden, das in dem Benutzerprofil beinhaltet sein soll.

15. Dentaleinheit nach einem der Ansprüche 12 bis 14, wobei die Funktion zum Erzeugen oder Bearbeiten des Benutzerprofils eingerichtet ist, um von einem Benutzer eine Auswahl zu empfangen, basierend auf welcher ein voreinstellbarer Wert, der einer Steueroperation oder Funktion gegeben werden soll, festgelegt wird.

## Revendications

1. Unité dentaire et enregistreur externe de stockage de données, l'unité dentaire comprenant ;
- des connexions pour des instruments et pour un dispositif de commande (9),
- un microprocesseur agencé pour commander l'unité dentaire, dans laquelle ledit enregistreur externe de stockage de données est externe à l'unité dentaire et comprend un profil utilisateur propre à l'utilisateur,
- un moyen de lecture du profil utilisateur ou d'une partie du profil utilisateur à partir dudit enregistreur externe à l'unité dentaire,
- un écran,
dans laquelle le microprocesseur est agencé pour montrer sur l'écran un menu (4, 5), qui contient des icônes relatives à des fonctions de l'unité dentaire et pour recevoir des flux du dispositif de commande (9) relatifs aux icônes et pour commander des instruments sur la base des flux reçus du dispositif de commande (9), et dans laquelle le profil utilisateur contient des réglages relatifs à des contenus du menu, à l'apparence des icônes et/ou à l'emplacement des icônes.

2. Unité dentaire selon la revendication 1, dans laquelle ledit moyen de lecture du profil utilisateur comprend une liaison de communication de données pour lire le profil utilisateur ou une partie du profil utilisateur depuis un serveur d'un réseau de données via la liaison de communication de données, et/ou dans laquelle ledit moyen de lecture du profil utilisateur comprend une liaison de communication de données vers une autre unité dentaire pour lire le profil utilisateur ou une partie du profil utilisateur depuis l'autre unité dentaire via la liaison de communication de données.

3. Unité dentaire selon la revendication 1 ou 2, dans laquelle ledit moyen de lecture du profil utilisateur comprend un moyen de lecture pour lire le profil utilisateur ou une partie du profil utilisateur depuis un enregistreur porté par un utilisateur, tel qu'une clé USB.

4. Unité dentaire selon l'une quelconque des revendications 1 - 3, dans laquelle l'unité dentaire comprend une fonction pour transférer le profil utilisateur ou une partie du profil utilisateur vers un enregistreur externe à l'unité dentaire.

5. Unité dentaire selon l'une quelconque des revendications 1 - 4, dans laquelle l'unité dentaire comprend un profil de dispositif propre à l'unité dentaire et le microprocesseur est agencé pour commander l'unité dentaire en fonction à la fois du profil de dispositif et du profil utilisateur propre à l'utilisateur.

6. Unité dentaire selon la revendication 5, dans laquelle l'unité dentaire comprend une fonction pour transférer le profil de dispositif vers un enregistreur externe à l'unité dentaire et pour lire le profil de dispositif depuis ledit enregistreur externe à l'unité dentaire.

7. Unité dentaire selon l'une quelconque des revendications 1 - 6, dans laquelle le profil utilisateur contient des paramètres relatifs à des instruments de commande.

8. Unité dentaire selon l'une quelconque des revendications 1 - 7, dans laquelle le dispositif de commande (9) comprend des sélecteurs (10, 11, 12, 13) et le profil utilisateur contient des réglages pour définir des réponses relatives à une utilisation des sélecteurs (10, 11, 12, 13).

9. Unité dentaire selon l'une quelconque des revendications 1 - 8, dans laquelle le profil utilisateur contient des réglages pour des fonctions liées aux icônes du menu (4, 5), et/ou dans laquelle le profil utilisateur contient au moins une fonction programmée, qui est agencée pour commander l'unité dentaire pour réaliser une combinaison d'au moins deux fonctions de commande.

10. Unité dentaire selon la revendication 9, dans laquelle l'unité dentaire est agencée pour commander un fauteuil pour patient et au moins une fonction programmée contient une fonction de commande pour placer le fauteuil pour patient dans une position prédéfinie, et/ou dans laquelle au moins une fonction programmée contient une fonction de commande pour amener au moins un instrument dans un état de fonctionnement prédéfini.

11. Unité dentaire selon la revendication 9 ou 10, dans laquelle au moins une fonction programmée contient une fonction de commande pour amener le menu (4, 5) montré sur l'écran dans un état prédéfini.

12. Unité dentaire selon l'une quelconque des revendications 1 - 11, dans laquelle l'unité dentaire contient une fonction de création ou d'édition du profil utilisateur.

13. Unité dentaire selon la revendication 12, dans laquelle le profil utilisateur est un fichier enregistré dans un enregistreur.

14. Unité dentaire selon la revendication 12 ou 13, dans laquelle la fonction de création ou d'édition du profil utilisateur est agencée pour recevoir une sélection de la part d'un utilisateur pour sélectionner les opérations ou fonctions de commande commandées en fonction du profil utilisateur à inclure dans le profil utilisateur.

15. Unité dentaire selon l'une quelconque des revendications 12 - 14, dans laquelle la fonction de création ou d'édition du profil utilisateur est agencée pour recevoir de la part d'un utilisateur une sélection sur la base de laquelle une valeur pré-réglable à donner à une opération ou fonction de commande est définie.
